# EUROPÄISCHE PATENTSCHRIFT

(11) **EP 4 445 444 B1**
(45) Veröffentlichungstag und Bekanntmachung des Hinweises auf die Patenterteilung: **21.01.2026**
(21) Anmeldenummer: 22826318.2
(22) Anmeldetag: 06.12.2022
(51) Int. Cl.: H01M 50/517, H01M 10/613, H01M 10/6556, H01M 10/6557, H01M 10/6567, H01M 50/502, H01M 50/503, H01M 50/526

(54) **ANSCHLUSSKLEMME FÜR ABLEITER VON ZELLEN EINES AKKUBLOCKS**
CONNECTING TERMINAL FOR ARRESTERS OF CELLS OF A BATTERY BLOCK
BORNE DE RACCORDEMENT POUR CONNECTEURS D'ÉLÉMENTS D'UN BLOC D'ACCUMULATEURS

(30) Priorität: 06.12.2021 AT 509722021
(43) Veröffentlichungstag der Anmeldung: 16.10.2024
(73) Patentinhaber: Stohl Group GmbH, 2301 Groß Enzersdorf (AT)
(72) Erfinder: SAKOWICZ, Michael, 1140 Wien (AT); THONET-DRECHSEL, Philipp, 1220 Wien (AT)
(74) Vertreter: Müllner, Martin
(86) Internationale Anmeldenummer: PCT/AT2022/060431
(87) Internationale Veröffentlichungsnummer: WO 2023/102588

(56) Entgegenhaltungen:
- DE-A1- 102010 026 133
- DE-A1- 102010 026 133
- DE-A1- 102010 052 507
- DE-A1- 102010 052 507
- DE-A1- 102011 119 212
- DE-A1- 102011 119 212
- DE-A1- 102014 216 813
- DE-A1- 102014 216 813
- US-A1- 2020 411 831
- US-A1- 2020 411 831

## Beschreibung

### Technisches Gebiet

Die vorliegende Erfindung betrifft eine Anschlussklemme für Ableiter, nämlich Anodenableiter und/oder Kathodenableiter, von Zellen eines Akkublocks, umfassend eine Busbar mit zumindest vier Kontaktflächen, wobei jeweils zumindest ein Ableiter zwischen jeder Kontaktfläche und einem zugehörigen Klemmelement festklemmbar ist, wobei weiters Spannelemente, insbesondere Spannschrauben, vorgesehen sind, die die Klemmelemente gegen die Kontaktflächen der Busbar pressen, und wobei die Busbar aus einem Material mit hoher elektrischer Leitfähigkeit gebildet und einstückig ausgebildet ist.

### Stand der Technik

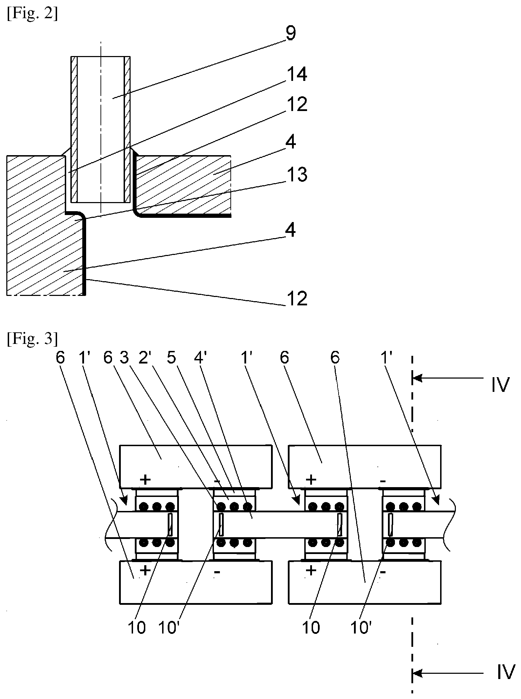

Derartige Anschlussklemmen sind aus US 2020411831 A bekannt und kommen insbesondere bei Elektrofahrzeugen zum Einsatz. Die Busbar enthält zwei Ausnehmungen, in die jeweils ein Keilkörper eingesetzt ist. Es lassen sich somit vier Ableiter miteinander verbinden, sodass zwei parallel geschaltete Zellen in Serie mit zwei weiteren parallel geschalteten Zellen geschaltet werden können, wie insbesondere Fig. 3 dieser Schrift veranschaulicht. In dieser Schrift ist jedoch keine Kühlung beschrieben.

Ein ähnliches System ist aus WO 2012/069209 A bekannt, dort ist allerdings in jeder Busbar nur eine Ausnehmung vorhanden, sodass alle Zellen in Serie geschaltet werden müssen. Auf Seite 7, letzter Absatz dieser Schrift ist ausdrücklich erwähnt, dass alle Zellen elektrisch in Serie geschaltet sind; jeder Keilkörper verbindet somit einen Anodenableiter einer Zelle mit dem Kathodenableiter der nächsten Zelle. Gemäß dieser Schrift (Seite 7, mittlerer Absatz) weist jeder Keilkörper einen Kühlkanal auf, durch den eine Kühlflüssigkeit strömt.

Nachteilig bei diesem System ist, dass jeder Kühlkanal zwei Anschlüsse benötigt (für die Zufuhr und die Abfuhr von Kühlflüssigkeit) und gleich viele Zellen wie Keilkörper vorgesehen sind (siehe Fig. 3 und Seite 8, letzter vollständiger Absatz). Pro Zelle sind somit zwei Kühlmittelanschlüsse erforderlich.

### Darstellung der Erfindung

Es ist Aufgabe der vorliegenden Erfindung, eine Lösung bereitzustellen, bei der ein hochwertiger Strom- und Wärmeübergang gegeben ist und die bei parallel geschalteten Zellen einfacher zu realisieren ist.

Diese Aufgabe wird durch eine Anschlussklemme der eingangs genannten Art erfindungsgemäß dadurch gelöst, dass in der Busbar zumindest ein Kühlkanal vorgesehen ist, der von einem Kühlfluid durchströmbar ist, sodass die Busbar gleichzeitig ein Kühlelement für den Akkublock ist.

Die vier Kontaktflächen lassen sich auf zweierlei Art realisieren:

Einerseits ist es analog zur genannten US 2020411831 A möglich, dass jeweils zwei Kontaktflächen durch eine Ausnehmung in der Busbar realisiert sind, in die jeweils ein Keilkörper eingesetzt ist, der als Klemmelement dient, wobei die Keilkörper im Querschnitt die Form eines Trapezes haben und die Ausnehmungen im Querschnitt dem Trapez entsprechen, wobei die Keilkörper mit der kürzeren Parallelseite des Trapezes voraus in die Busbar eingesetzt sind. Hier ergibt sich der Vorteil, dass bei entsprechendem Keilwinkel die Anordnung selbsthemmend ist, d.h. auch wenn sich die Spannelemente, insbesondere Spannschrauben, lösen, bleibt der sichere Kontakt bestehen. Infolge der Keilkörper ist aber eine relativ große Bauhöhe notwendig.

Will man eine geringere Bauhöhe erreichen, kann man alternativ dazu vorsehen, dass die Busbar flach und länglich ausgebildet ist, dass an beiden Enden der Busbar jeweils zwei Kontaktflächen vorgesehen sind, die symmetrisch zur Längsachse liegen, und dass die Klemmelemente leistenförmig sind.

Durch die Ausbildung als Busbar können die Kathodenableiter oder die Anodenableiter mehrerer Zellen des Akkublocks miteinander verbunden werden (Parallelschaltung). Die vorgestellte Lösung ist somit für unterschiedliche Leistungsbereiche skalierbar. Typisch werden für höhere Stromstärken zwei bis fünf Zellen parallelgeschaltet.

Bei der Ausführung mit Keilkörpern können die Busbars entsprechend zwei bis fünf Ausnehmungen für Keilkörper aufweisen: Bei z.B. drei parallelgeschalteten Zellen müssen sechs Pole miteinander verbunden werden, drei Pluspole einer Gruppe parallel geschalteter Zellen und drei Minuspole der nächsten Gruppe parallel geschalteter Zellen, und durch jeden Keilkörper werden zwei Pole miteinander verbunden. Diese Lösung ermöglicht ein Schnell-Ladesystem, bei dem innerhalb von fünf Minuten 60 bis 80% einer vollen Ladung aufgenommen werden.

Dabei wird jedoch pro Zelle eine Abwärme von 30-40 W frei, das sind bei 1000 Zellen immerhin 30 bis 40 kW Wärme, die auf niedrigem Temperaturniveau und ohne versteckte Hitzestaus unmittelbar entfernt werden muss. Auch bei höherer Leistungsentnahme entsteht Abwärme, die ebenfalls auf niedrigem Temperaturniveau ausgetragen werden muss.

Um dies zu ermöglichen, ist in der Busbar ein Kühlkanal zwischen zwei Ausnehmungen vorgesehen; wenn mehr als zwei Ausnehmungen vorgesehen sind, zweckmäßiger Weise zwischen jeweils zwei Ausnehmungen ein Kühlkanal. Diese Anordnung hat den Vorteil, dass der Platz zwischen den Ausnehmungen, der gemäß der oben genannten US 2020411831 A ungenützt bleibt, für die Kühlkanäle ausgenützt wird, sodass nicht, wie z.B. in DE 102014001975 A vorgeschlagen, die Kühlkanäle über der Busbar angebracht werden müssen, wo sie wertvollen Platz einnehmen. Außerdem kühlt ein Kühlkanal bis zu vier Ableiter, sodass weniger Kühlkanäle als gemäß der oben genannten WO 2012/069209 A notwendig sind.

Bei der Ausführung mit flacher Busbar können zwei Zellen parallelgeschaltet werden, weil ja an beiden Enden jeweils zwei Kontaktflächen vorgesehen sind. Es lassen sich aber auch drei oder vier Zellen parallelschalten, weil zwei Rücken an Rücken angeordnete Zellen - mit ihren Ableitern aneinander liegend - zwischen einer Kontaktfläche und dem zugehörigen Klemmelement geklemmt werden können.

Es ist zweckmäßig, wenn die Klemmbereiche der Busbar zur Verbesserung des Stromübergangs mit einer elektrisch leitenden Schicht, vorzugsweise aus Graphit und/oder Kupfer, versehen sind, die zur Verbesserung des Wärmeübergangs auch Wärme leitend ist. Dadurch werden einerseits der elektrische Übergangswiderstand und damit auch die Abwärme reduziert, und andererseits wird - was noch wichtiger ist - auch der Wärmeübergangswiderstand reduziert. Die Kontaktflächen selbst weisen nämlich selbst bei hochwertiger Fertigung geringe Luftspalte auf, die den Wärmeübergang mehr behindern als den Stromübergang. Durch Beschichtung der Kontaktflächen mit einer Mischung aus Graphit und feinstem Kupferstaub, als leicht gepresste Platte bzw. als Paste, konnte eine wesentliche Verbesserung sowohl des Wärmeübergangs als auch des Stromübergangs erreicht werden; und je geringer der Wärmewiderstand vom Inneren der Zelle des Akkublocks bis zum Kühlfluid ist, desto kühler ist bei gegebener abzuführender Leistung und gegebener Temperatur des Kühlfluids das Innere der Zelle.

Zwecks Korrosionsschutzes ist es günstig, wenn die Busbar und/oder die Klemmelemente zumindest teilweise mit Silber oder Nickel beschichtet sind. Da diese Metalle auch sehr gut Strom und Wärme leiten, können auch die Kontaktflächen damit beschichtet sein, als Alternative zu der erwähnten Mischung aus Graphit und Kupferstaub.

Insbesondere wenn die Busbar im 3D-Druck hergestellt ist, mit Hilfe dessen fast beliebige Formen hergestellt werden können, kann man weiters vorsehen, dass mehrere Kühlkanäle in einer Busbar vorgesehen sind, wobei diese Kühlkanäle innerhalb der Busbar miteinander verbunden sind. Auf diese Weise genügen zwei Anschlüsse für das Kühlfluid, um beispielsweise sechs oder auch zehn Ableiter zu kühlen. Der Aufwand für die Anschlüsse der Kühlkanäle wird auf diese Weise erheblich reduziert.

Es ist zweckmäßig, wenn im Kühlkanal bzw. in den Kühlkanälen des Kühlelements Stege, Rippen, Finnen oder dergleichen vorgesehen sind. Dadurch wird der thermische Widerstand zwischen dem Metall des Kühlelements und dem Kühlfluid reduziert, weil die entsprechende Oberfläche vergrößert wird. Dies ist insbesondere dann sinnvoll, wenn (wie unten erläutert) die innere Oberfläche des Kühlkanals elektrisch isoliert ist.

Wenn der Kühlkanal nicht elektrisch isoliert ist, muss das Kühlmittel nichtleitend sein, wenn (wie meist) entweder Kontakte auf unterschiedlichem elektrischem Potential mit demselben Kühlmittel gekühlt werden sollen oder der Wärmetauscher aus Sicherheitsgründen nicht auf dem Potential der Kontakte liegen darf und selbst keine Isolierung gegenüber dem Kühlmittel aufweist. Allerdings kommt es hier zu einem bislang zu wenig beachteten Phänomen: Bei einer Flüssigkeitskühlung muss mit einer Restleitfähigkeit gerechnet werden, alleine durch das Absondern von Metallionen von den Leitungen und den Wärmetauschern. Die hohe Spannung bringt Probleme mit sich, die sich in einer Korrosion von innen auswirken.

Gemäß einer Ausführungsform der Erfindung ist deshalb vorgesehen, dass der Kühlkanal bzw. die Kühlkanäle mit einer elektrisch isolierenden Beschichtung ausgekleidet sind. Auf diese Weise kann beispielsweise Keramik als isolierendes Material verwendet werden, und man läuft nicht Gefahr, dass diese bricht, weil sie ja im Inneren des Kühlelements vorhanden und somit vor mechanischen Belastungen geschützt ist. Solch eine Beschichtung kann im selben Arbeitsgang auch auf den Außenflächen der Busbar aufgebracht werden, wenn dort eine elektrische Isolierung gewünscht ist. Die Busbar besteht bevorzugt hauptsächlich aus Aluminium.

Wenn zusätzlich der Anschluss für das Kühlfluid aus einem elektrisch isolierenden Material besteht, ist das Kühlfluid vollständig isoliert, es muss also kein nichtleitendes Fluid sein, und es besteht auch keinerlei Gefahr der Korrosion von innen.

Für das Aufbringen von Beschichtungen sind schon verschiedene Vorschläge gemacht worden. So wird in der DD 301925 A9 und der dazu sehr ähnlichen DD 300725 A9 eine poröse Keramik hergestellt, die mit einer Metallschmelze infiltriert wird, wobei ein Gradient der Konzentration erzielt wird. Aus DE 102012200654 B ist ein Schlicker bekannt, der sich z.B. zum Beschichten von Maschinenbauteilen eignet.

Zur Verbesserung der Haftung zwischen der elektrisch isolierenden Beschichtung und dem Metall des Kühlelements kann das Metall porös sein. Das Metall kann aber auch Bereiche (insbesondere außen) aufweisen, die dicht sind, oder aber insgesamt dicht sein.

Die elektrisch isolierende Beschichtung kann wasserbasierter Schlicker, ein Silikonmaterial oder ein Polymer, insbesondere ein Polyester oder ein Polyurethan, sein, und sie kann mit Füllstoffen versehen sein, die aus keramischen Partikeln, aus Quarzsanden oder aus titanoxidischen Partikeln bestehen können. Die Füllstoffe können auch Fasern enthalten, die vorzugsweise aus elektrisch nichtleitenden Polymeren bestehen.

Die Verwendung von mineralischen Substanzen, wie Quarzmehl oder Titandioxid, als Füllstoff dient dazu, die Wärmeleitfähigkeit zu erhöhen, was insbesondere bei der Verwendung von Kunststoffen als Beschichtung vorteilhaft ist. Diese Füllung kann durch Polymerfasern unterstützt werden, wobei die Fasern die Aufgabe haben, das schnelle Ablaufen der Beschichtung von den Oberflächen zu verzögern und damit eine größere Dicke zu erreichen, falls dies für eine hohe elektrische Isolation notwendig oder gewünscht ist.

Schlicker werden üblicherweise in der Keramikindustrie als anorganische Kleber für rohe Tonteile verwendet. Schlicker bestehen aus demselben Material wie die Tonteile, nur der Wasseranteil ist so hoch, dass eine dickflüssige Masse entsteht. In der Massenproduktion von Porzellanteilen wird der Schlicker für Vakuumgussverfahren eingesetzt, um gleichförmige Produkte in Serie herzustellen. Bei der vorliegenden Entwicklung wird der Schlicker dazu verwendet, eine Abdichtung zu erreichen bzw. eine elektrisch isolierende Beschichtung eines Metallteils herzustellen. Schlicker sind sehr dicht, müssen aber bei höheren Temperaturen gebrannt werden. Sie verbinden sich sehr gut mit Metalloxiden. Anschlüsse aus Industriekeramikrohren für das Leiten von Kühlfluiden lassen sich mit Schlicker als anorganischem Kleber sehr gut einbauen.

Andere Beschichtungsmassen können aus der weiten Gruppe der Polymere gefunden werden. Die folgenden Gruppen stehen beispielhaft für viele Polymere, die ähnliche Eigenschaften haben: Polyester und die Sondergruppe der Polyurethane zeichnen sich durch eine hohe Elastizität und Spannungsfestigkeit aus. Das Rohmaterial ist flüssig, es wird durch einen Vernetzer und/oder durch Wärme vernetzt. Die Klebeeigenschaften sind gut, wenn die einzuklebenden Teile, wie Anschlüsse, vor dem Vernetzen eingesetzt werden.

Ähnliche Eigenschaften haben Silikonvergussmassen bzw. Silikone. Sie werden ähnlich wie die Polyurethane mit Vernetzern verarbeitet und sind sehr gute elektrische Isolatoren. Die Klebeeigenschaften können je nach Produkt stark variieren.

Für alle Beschichtungen gilt, dass sie unter leichtem Druck in das Bauteil eingebracht werden sollen. Durch die Porosität des Trägermaterials kann die Luft entweichen und es werden alle Innenflächen sicher beschichtet.

Weiters ist es zweckmäßig, wenn der Anschluss für das Kühlfluid aus einem elektrisch isolierenden Material besteht. Wenn solch ein Anschluss, beispielsweise ein Rohrstutzen, vor dem Aufbringen der Beschichtung eingesetzt wird, bewirkt die Beschichtung ein Verkleben und dichtet einen eventuellen Spalt ab.

Will man das Metall des Kühlelements dicht ausführen, kann alternativ ein Innenbeschichten im Vakuum vorgenommen werden. Dabei wird das Kühlelement zusammen mit der Beschichtungsmasse in ein Vakuumgefäß gelegt und die Luft langsam entfernt. Dabei kann das Beschichtungsmittel auch aufschäumen, weil Gase aus der Masse entweichen. Der Vorteil der Vakuumbehandlung alleine für das Beschichtungsmittel liegt in der Vermeidung von Mikroporen, die durch Gaseinschlüsse leicht entstehen können.

Für die Beschichtung vorteilhaft ist eine hohe Spannungsfestigkeit der Beschichtung, insbesondere des Kunststoffs, um auch der vollen Betriebsspannung bis zu 1000 V zu widerstehen.

### Kurze Beschreibung der Zeichnungen

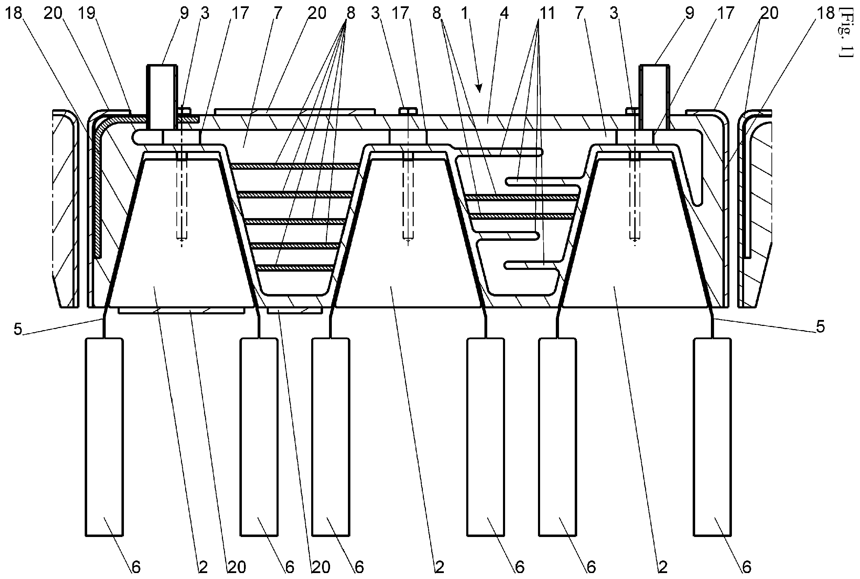

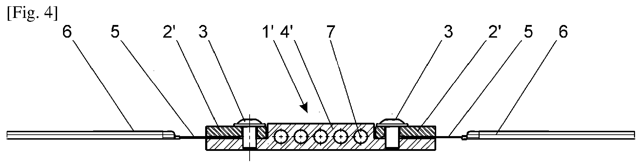

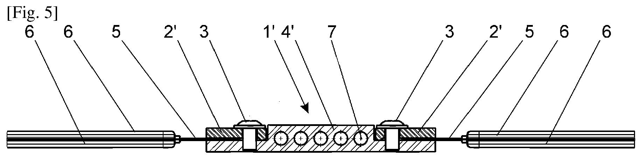

An Hand der beiliegenden Zeichnungen wird die vorliegende Erfindung näher erläutert. Es zeigt: Fig. 1 eine Ausführungsform der vorliegenden Erfindung im Schnitt; Fig. 2 einen Anschluss für einen Kühlkanal; Fig. 3 zeigt eine andere Ausführungsform in Draufsicht; Fig. 4 zeigt einen Schnitt durch diese Ausführungsform entlang der Linie IV-IV in Fig. 3; und Fig. 5 zeigt eine Ansicht analog zu Fig. 4, wobei allerdings vier Zellen angeschlossen sind.

### Weg(e) zur Ausführung der Erfindung

Fig. 1 zeigt eine Anschlussklemme 1 mit drei Keilkörpern 2, die in eine Busbar 4 eingesetzt sind. Die Keilkörper 2 werden mittels je einer Spannschraube 3 an die Busbar 4 (Stromschiene) gepresst. Zwischen den Keilkörpern 2 und der Busbar 4 sind Ableiter 5 (Elektrodenbleche) von Batteriezellen 6 eingeklemmt. Die Batteriezellen 6 befinden sich unterhalb der Anschlussklemme 1. Die Keilkörper 2 sind im Querschnitt dargestellt, wobei in der Mitte die Spannschraube 3 liegt.

Die in Fig. 1 dargestellte Ausführungsform der vorliegenden Erfindung ist für die Parallelschaltung von drei Pouch-Zellen geeignet: es werden drei Anodenableiter einer Gruppe und drei Kathodenableiter der nächsten Gruppe von Zellen miteinander verbunden. Dabei weist die Busbar 4 einen Kühlkanal 7 auf, er wird also als Kühlkörper betrieben, während die Keilkörper 2 nicht gekühlt werden. Diese Anordnung hat den Vorteil, dass auch schmale Batteriezellen 6 eingesetzt werden können.

Der Kühlkanal 7 weist zwei Bereiche mit großem Querschnitt auf, die sich zwischen den Keilkörpern 2 befinden. Sie sind oben durch einen relativ schmalen Kanal miteinander verbunden. Man kann dies daher auch so sehen, dass hier zwei Kühlkanäle vorgesehen sind, die sich jeweils zwischen den Ausnehmungen für die Keilkörper 2 befinden und die im Inneren der Busbar 4 miteinander verbunden sind.

Der Kühlkanal 7 weist Querstege 8 und Kühlfinnen 11 auf. Der Kühlkanal 7 kann innen mit einem isolierenden Material beschichtet sein (nicht dargestellt).

Die Spannschrauben 3 werden durch den Kühlkanal 7 geführt, wobei ein eigener Stützring 17 aus dem Material des Busbar-Körpers die Kräfte von der Spannschraube 3 bis in den Keilbereich überträgt. Das ist aber nicht zwingend notwendig, die Busbar kann im Bereich jeder Spannschraube 3 auch aus Vollmaterial bestehen, sodass keine Maßnahmen zur Abdichtung des Kühlkanals 7 notwendig sind.

Im Hohlraum des Kühlkanals 7 sind Querstege 8 bzw. Kühlfinnen 11 zur Strömungsführung vorgesehen, um eine bessere Durchspülung des Kühlkanals 7 zu erreichen. Selbstverständlich kann dieses Anreihen von Klemmen für eine beliebige Zahl von Batteriezellen 6 erweitert werden.

Die Querstege 8 dienen gleichzeitig zur Verbesserung des Wärmeübergangs von den Ableitern 5 (Elektrodenblechen) in das Zentrum der Busbar 4, sodass auch die innen liegende Strömung zur Kühlung beiträgt. Es ist somit der gesamte Querschnitt des Kühlkanals 7 für die Kühlung wirksam.

Zusätzliche Kühlfinnen 11 in der Nähe der Ableiter 5 (Elektrodenbleche) sorgen für einen verbesserten Wärmeübergang in den Kühlkanal 7. Die Querstege 8 bzw. die Kühlfinnen 11 können auch derart ausgeformt werden, dass die Strömung im Kühlkanal 7 turbulent gehalten wird. Mit dem 3D-Druck ist es möglich, entsprechende Wellenformen oder Schrägen in die Querstege 8 oder Kühlfinnen 11 zu legen, sodass die Strömung wiederholt umgelenkt wird. Zu beachten ist dabei, dass die Formen nicht zur Bildung von Luftblasen beitragen, weil diese den Wärmetransport massiv behindern würden.

Mit dieser Gestaltung der Kühlkanäle 7 kann im Vergleich zu einer einfachen Bohrung eine um den Faktor 3 bis 5 vergrößerte, kühlwirksame Oberfläche zwischen der Busbar 4 und dem nicht näher bezeichneten Kühlfluid in den Kühlkanälen 7 bereitgestellt werden. Damit kann der höhere thermische Widerstand einer Beschichtung 12 (siehe Fig. 2) mehr als kompensiert werden. Die Beschichtung 12 ist in konstanter Stärke auf der gesamten Innenfläche des Kühlkanals 7 (siehe Fig. 1) aufgetragen.

Die Herstellung des Kühlelements kann z.B. im 3D-Druck erfolgen. Trotz einer komplexen Geometrie mit Kühlfinnen 11 und Querstegen 8 im Inneren kann der 3D-Druck die Herstellung möglich machen.

Mit dem 3D-Druck besteht die Möglichkeit, einen porösen, metallischen Gegenstand herzustellen. Diese Porosität ist sehr von Vorteil, wenn danach im Inneren eine elektrisch isolierende Beschichtung aufgebracht wird. Porös heißt, dass ein Gas, wie Luft, durch die Struktur diffundieren kann. Wird jetzt in die Hohlräume des fertig gedruckten Kühlelements eine dichtende und/oder isolierende Substanz eingefüllt, dann kann die Luft aus den Hohlräumen durch die Poren entweichen. Somit entweicht die Luft von selbst überall, wenn auch nur ein leichter Überdruck angelegt wird, und es verbleiben keine Blasen, die für Schwachstellen sorgen würden.

Die Poren selbst sind hingegen so klein, dass dickflüssige Substanzen wie Schlicker oder gummiartige Mischungen nicht tief eindringen. Die Verzahnung zwischen den Werkstoffen ist jedoch ausreichend, um eine stabile Beschichtung im Inneren der Hohlräume zu erreichen.

Mit dieser Methode werden drei wesentliche Ziele erreicht:
- Die Kühlung der Batterien über die Ableiter
- Ein sicheres Abdichten aller Hohlräume
- Eine elektrisch wirksame Barriere gegenüber jeder Kühlflüssigkeit

Die Beschichtung 12 kann auch durch Tränkung, insbesondere durch Tränkung unter Druck, oder mit einem Sprühverfahren hergestellt werden.

Um die Wärmeabfuhr von den Seitenflächen 18 der Busbar 4 zu verbessern, ist ein Heatpipe 19 in der Außenseite vorgesehen. Heatpipes haben den Vorteil, dass sie Wärme bis zu 1000 Mal besser leiten als Kupfer und somit auch geringe Temperaturdifferenzen übertragen können. Beim umgekehrten Betrieb zum Aufwärmen der Zellen im Winter stört der Heatpipe nicht, er transportiert nur wenig Wärme nach unten. Moderne Heatpipes können in einen Kanal eingeklemmt oder eingestemmt werden, um die Wärme zu transportieren.

Bei der Elektromobilität werden Pouches mit sehr hohen Spannungen und Strömen eingesetzt. Es ist daher nahe liegend, die Anschlussklemmen ganz allgemein mit seitlichen Isolierschichten 20 zu versehen, damit bei Fehlbedienungen in der Montage etc. keine katastrophalen Fehlschlüsse entstehen können. Die Abstände zwischen benachbarten Anschlussklemmen 1 betragen nur ein paar Millimeter, und jede Verschiebung oder ein in den Spalt fallendes Teil kann einen nicht mehr beherrschbaren Kurzschluss auslösen. Diese Isolierschichten 20 können an allen Stellen des Klemmensystems, wie an der Oberfläche der Keilkörper 2 und den Oberflächen der Busbar 4 angebracht werden, um die Sicherheit generell anzuheben. Selbstredend bleiben die Kontaktflächen für die Stromübertragung frei.

In Fig. 2 ist ein Anschluss für das Kühlfluid, das in den Kühlkanälen 7 zirkuliert, dargestellt: Das Kühlfluid wird über Rohre 9 zu- bzw. abgeführt. Das Rohr 9 sitzt auf einer Nase 13 auf, die ein zu tiefes Einschieben verhindert. Das Rohr 9 besteht aus einem elektrisch isolierenden, mit der jeweiligen Beschichtung 12 gut verklebbaren Werkstoff, wie z. B. Keramik, Glas, PVC und ähnliche. Es können die Rohre 9 auch aus den Werkstoffen der Beschichtung gefertigt werden, um eine gute Haftung zu erreichen. Das Rohr 9 wird vor dem Beschichten eingesetzt, sodass der Spalt 14 zwischen dem Keilkörper 2 und dem Rohr 9 sicher mit der Beschichtung 12 gefüllt ist.

### (In Fig. 2 ist der Spalt 14 links noch nicht gefüllt dargestellt.)

Das Kühlfluid kann über Schläuche, aber auch über nicht weiter ausgeführte Fluidverteilschienen mit elastischen Dichtungen zu- bzw. abgeführt werden.

In den Fig. 3 und 4 ist eine andere Ausführungsform dargestellt. Es sind hier vier Batteriezellen 6 dargestellt. Die Pluspole der beiden rechten Batteriezellen 6 und die Minuspole der beiden linken Batteriezellen 6 sind an ein und derselben Anschlussklemme 1', nämlich an der mittleren Anschlussklemme 1', befestigt, also leitfähig miteinander verbunden. Es sind somit zwei parallelgeschaltete Batteriezellen 6 (rechts dargestellt) in Serie mit zwei benachbarten parallelgeschalteten Batteriezellen 6 (links dargestellt) verbunden. Diese Serienschaltung wird nach links und rechts fortgesetzt, d.h. der Pluspol der beiden linken Batteriezellen 6 ist an eine weitere, nur teilweise dargestellte Anschlussklemme 1' (die linke Anschlussklemme 1') angeschlossen, an welche die Minuspole der beiden nächsten, nicht dargestellten Batteriezellen 6 angeschlossen sind, usw.

Die Verbindung zwischen den Ableitern 5 der Batteriezellen 6 mit der Anschlussklemme 1' ist in Fig. 4 zu sehen. Die Ableiter 5 liegen an jeweils einer Kontaktfläche der Busbar 4' auf, und von der gegenüberliegenden Seite ist ein Klemmelement 2' mit einer Spannschraube 3 gegen den jeweiligen Ableiter 5 vorgespannt. Zwischen den Kontaktflächen der Busbar 4' weist die Busbar 4' Kühlkanäle 7 auf, im Ausführungsbeispiel fünf Kühlkanäle 7. Zur Zufuhr des Kühlfluids ist eine gemeinsame Zufuhröffnung 10 (siehe Fig. 3) vorgesehen, zur Abfuhr ist eine gemeinsame Abfuhröffnung 10' vorgesehen. Es werden also in diesem Beispiel vier Batteriezellen 6 mit einer Anschlussklemme, also nur einer Zuleitung und nur einer Ableitung von Kühlfluid, gekühlt, allerdings jeweils nur über einen der beiden Ableiter 5. Im Durchschnitt kommt eine Busbar 4' auf zwei Batteriezellen 6.

Wenn vier Batteriezellen 6 parallelgeschaltet werden sollen, dann ist dies gemäß Fig. 5 ganz einfach dadurch möglich, dass man jeweils zwei Batteriezellen 6 Rücken an Rücken anordnet, sodass deren Ableiter 5 aneinander anliegen. Diese aneinander anliegenden Ableiter 5 werden dann gemeinsam zwischen den Kontaktflächen der Busbar 4' und dem Klemmelement 2' geklemmt. In diesem Fall werden sogar acht Batteriezellen 6 von einer Busbar 4' gekühlt.

Wenn die Ableiter 5 der Batteriezellen 6 so angeordnet sind, dass sie nicht aneinander anliegen, wenn zwei Batteriezellen 6 Rücken an Rücken liegen, dann kann man abweichend von Fig. 5 oberhalb und unterhalb der der Busbar 4' ein Kontaktfläche vorsehen und sowohl oberhalb als auch unterhalb ein Klemmelement 2' vorsehen. Dann sind die Ableiter 5 um die Dicke der Busbar 4' voneinander beabstandet.

## Patentansprüche

1. Anschlussklemme (1, 1') für Ableiter (5), nämlich Anodenableiter und/oder Kathodenableiter, von Zellen (6) eines Akkublocks, umfassend eine Busbar (4, 4') mit zumindest vier Kontaktflächen, wobei jeweils zumindest ein Ableiter (5) zwischen jeder Kontaktfläche und einem zugehörigen Klemmelement (2, 2') festklemmbar ist, wobei weiters Spannelemente, insbesondere Spannschrauben (3), vorgesehen sind, die die Klemmelemente (2, 2') gegen die Kontaktflächen der Busbar (4, 4') pressen, und wobei die Busbar (4, 4') aus einem Material mit hoher elektrischer Leitfähigkeit gebildet und einstückig ausgebildet ist, **dadurch gekennzeichnet, dass** in der Busbar (4, 4') zumindest ein Kühlkanal (7) vorgesehen ist, der von einem Kühlfluid durchströmbar ist, sodass die Busbar (4, 4') gleichzeitig ein Kühlelement (4, 4') für den Akkublock ist.

2. Anschlussklemme nach Anspruch 1, **dadurch gekennzeichnet, dass** jeweils zwei Kontaktflächen durch eine Ausnehmung in der Busbar (4) realisiert sind, in die jeweils ein Keilkörper (2) eingesetzt ist, der als Klemmelement dient, wobei die Keilkörper (2) im Querschnitt die Form eines Trapezes haben und die Ausnehmungen im Querschnitt dem Trapez entsprechen, wobei die Keilkörper (2) mit der kürzeren Parallelseite des Trapezes voraus in die Busbar (4) eingesetzt sind und wobei vorzugsweise der zumindest eine Kühlkanal (7) zwischen zwei Ausnehmungen angeordnet ist.

3. Anschlussklemme nach Anspruch 1, **dadurch gekennzeichnet, dass** die Busbar (4') flach und länglich ausgebildet ist, dass an beiden Enden der Busbar (4') jeweils zwei Kontaktflächen vorgesehen sind, die symmetrisch zur Längsachse liegen, und dass die Klemmelemente (2') leistenförmig sind.

4. Anschlussklemme nach einem der Ansprüche 1 bis 3, **dadurch gekennzeichnet, dass** die Klemmbereiche der Busbar (4, 4') zur Verbesserung des Stromübergangs mit einer elektrisch leitenden Schicht, vorzugsweise aus Graphit und/oder Kupfer, versehen sind, die zur Verbesserung des Wärmeübergangs auch Wärme leitend ist.

5. Anschlussklemme nach einem der Ansprüche 1 bis 4, **dadurch gekennzeichnet, dass** die Busbar (4, 4') und/oder die Klemmelemente zumindest teilweise mit Silber oder Nickel beschichtet sind.

6. Anschlussklemme nach einem der Ansprüche 1 bis 5, **dadurch gekennzeichnet, dass** mehrere Kühlkanäle (7) in einer Busbar (4, 4') vorgesehen sind, wobei diese Kühlkanäle (7) innerhalb der Busbar (4, 4') miteinander verbunden sind.

7. Anschlussklemme nach einem der Ansprüche 1 bis 6, **dadurch gekennzeichnet, dass** im Kühlkanal (7) bzw. in den Kühlkanälen des Kühlelements Stege (8), Rippen, Finnen (11) oder dergleichen vorgesehen sind.

8. Anschlussklemme nach einem der Ansprüche 1 bis 7, **dadurch gekennzeichnet, dass** der Kühlkanal (7) bzw. die Kühlkanäle mit einer elektrisch isolierenden Beschichtung (12) ausgekleidet sind.

9. Anschlussklemme nach Anspruch 8, **dadurch gekennzeichnet, dass** das Material der Busbar (4, 4') porös ist.

10. Anschlussklemme nach Anspruch 8 oder 9, **dadurch gekennzeichnet, dass** die elektrisch isolierende Beschichtung (12) wasserbasierter Schlicker, ein Silikonmaterial oder ein Polymer, insbesondere ein Polyester oder ein Polyurethan, ist.

11. Anschlussklemme nach einem der Ansprüche 8 bis 10, **dadurch gekennzeichnet, dass** die elektrisch isolierende Beschichtung (12) mit Füllstoffen versehen ist.

12. Anschlussklemme nach Anspruch 11, **dadurch gekennzeichnet, dass** die Füllstoffe aus keramischen Partikeln, aus Quarzsanden oder aus titanoxidischen Partikeln bestehen.

13. Anschlussklemme nach Anspruch 11 oder 12, **dadurch gekennzeichnet, dass** die Füllstoffe Fasern enthalten.

14. Anschlussklemme nach Anspruch 13, **dadurch gekennzeichnet, dass** die Fasern aus elektrisch nichtleitenden Polymeren bestehen.

15. Anschlussklemme nach einem der Ansprüche 1 bis 14, **dadurch gekennzeichnet, dass** der Anschluss für das Kühlfluid aus einem elektrisch isolierenden Material besteht.

## Claims

1. A connecting terminal (1, 1') for conductors (5), namely anode conductors and/or cathode conductors, of cells (6) of a battery block, comprising a busbar (4, 4') with at least four contact surfaces, wherein at least one conductor (5) can be clamped between each contact surface and an associated clamping element (2, 2'), wherein clamping elements, in particular clamping screws (3), are further provided which press the clamping elements (2, 2') against the contact surfaces of the busbar (4, 4'), and wherein the busbar (4, 4') is formed from a material with high electrical conductivity and is designed in one piece, **characterized in that** at least one cooling channel (7) is provided in the busbar (4, 4'), through which a cooling fluid can flow, so that the busbar (4, 4') is simultaneously a cooling element (4, 4') for the battery block.

2. Connecting terminal according to claim 1, **characterized in that** two contact surfaces are each realized by a recess in the busbar (4), into each of which a wedge body (2) is inserted, which serves as a clamping element, wherein the wedge bodies (2) have the shape of a trapezoid in cross section and the recesses correspond to the trapezoid in cross section, wherein the wedge bodies (2) are inserted into the busbar (4) with the shorter parallel side of the trapezoid first and wherein preferably the at least one cooling channel (7) is arranged between two recesses.

3. Connecting terminal according to claim 1, **characterized in that** the busbar (4') is flat and elongated, that two contact surfaces are provided at each end of the busbar (4'), which are symmetrical to the longitudinal axis, and **in that** the clamping elements (2') are strip-shaped.

4. Connecting terminal according to one of claims 1 to 3, **characterized in that** the clamping areas of the busbar (4, 4') are provided with an electrically conductive layer, preferably made of graphite and/or copper, to improve the current transfer, which is also heat-conducting to improve the heat transfer.

5. Connecting terminal according to one of claims 1 to 4, **characterized in that** the busbar (4, 4') and/or the clamping elements are at least partially coated with silver or nickel.

6. Connecting terminal according to one of claims 1 to 5, **characterized in that** a plurality of cooling channels (7) is provided in a busbar (4, 4'), said cooling channels (7) being connected to one another within the busbar (4, 4').

7. Connecting terminal according to one of claims 1 to 6, **characterized in that** webs (8), ribs, fins (11) or the like are provided in the cooling channel (7) or in the cooling channels of the cooling element.

8. Connecting terminal according to one of claims 1 to 7, **characterized in that** the cooling channel (7) or the cooling channels are lined with an electrically insulating coating (12).

9. Connecting terminal according to claim 8, **characterized in that** the material of the busbar (4, 4') is porous.

10. Connecting terminal according to claim 8 or 9, **characterized in that** the electrically insulating coating (12) is a water-based slip, a silicone material or a polymer, in particular a polyester or a polyurethane.

11. Connecting terminal according to one of claims 8 to 10, **characterized in that** the electrically insulating coating (12) is provided with fillers.

12. Connecting terminal according to claim 11, **characterized in that** the fillers consist of ceramic particles, quartz sands or titanium oxide particles.

13. Connecting terminal according to claim 11 or 12, **characterized in that** the fillers contain fibers.

14. Connecting terminal according to claim 13, **characterized in that** the fibers consist of electrically non-conductive polymers.

15. Connecting terminal according to one of claims 1 to 14, **characterized in that** the connection for the cooling fluid consists of an electrically insulating material.

## Revendications

1. Borne de connexion (1, 1') pour conducteurs (5), anodiques et/ou cathodiques, de cellules (6) d'un bloc de batteries, comprenant une barre de puissance (4, 4') dotée d'au moins quatre surfaces de contact, au moins un conducteur (5) pouvant être serré entre chaque surface de contact et un élément de serrage (2, 2') associé, des éléments de serrage, notamment des vis de serrage (3), étant également prévus pour presser les éléments de serrage (2, 2') contre les surfaces de contact de la barre de puissance (4, 4'), et la barre de puissance (4, 4') étant réalisée en un matériau à conductivité électrique élevée et étant réalisée d'une seule pièce, **caractérisée en ce qu'**au moins un canal de refroidissement (7) est prévu dans la barre de puissance (4, 4'), étant susceptible d'être traversé par un fluide de refroidissement, de sorte que la barre de puissance (4, 4') constitue simultanément un élément de refroidissement (4, 4') du bloc de batteries.

2. Borne de connexion selon la revendication 1, **caractérisée en ce que** deux surfaces de contact sont chacune réalisées par un évidement dans la barre de puissance (4), dans chacun duquel est inséré un corps de cale (2) qui sert d'élément de serrage, les corps de cale (2) ayant la forme d'un trapèze en section transversale et les évidements correspondent au trapèze en section transversale, les corps de cale (2) étant insérés dans la barre de puissance (4) avec le côté parallèle le plus court du trapèze en premier et de préférence le au moins un canal de refroidissement (7) étant disposé entre deux évidements.

3. Borne de connexion selon la revendication 1, **caractérisée en ce que** la barre de puissance (4') est plate et allongée, que deux surfaces de contact sont prévues à chaque extrémité de la barre de puissance (4'), qui sont symétriques par rapport à l'axe longitudinal, et que les éléments de serrage (2') sont en forme de bande.

4. Borne de connexion selon l'une des revendications 1 à 3, **caractérisée en ce que** les zones de serrage de la barre de puissance (4, 4') sont pourvues d'une couche électriquement conductrice, de préférence en graphite et/ou en cuivre, pour améliorer le transfert de courant, qui est également thermoconductrice pour améliorer le transfert de chaleur.

5. Borne de connexion selon l'une des revendications 1 à 4, **caractérisée en ce que** la barre de puissance (4, 4') et/ou les éléments de serrage sont au moins partiellement revêtus d'argent ou de nickel.

6. Borne de connexion selon l'une des revendications 1 à 5, **caractérisée en ce qu'**une pluralité de canaux de refroidissement (7) sont prévus dans une barre de puissance (4, 4'), lesdits canaux de refroidissement (7) étant reliés entre eux à l'intérieur de la barre de puissance (4, 4').

7. Borne de connexion selon l'une des revendications 1 à 6, **caractérisée en ce que** des nervures (8), des entretoises, des ailettes (11) ou analogues sont prévues dans le canal de refroidissement (7) ou dans les canaux de refroidissement de l'élément de refroidissement.

8. Borne de connexion selon l'une des revendications 1 à 7, **caractérisée en ce que** le canal de refroidissement (7) ou les canaux de refroidissement sont revêtus d'un revêtement électriquement isolant (12).

9. Borne de connexion selon la revendication 8, **caractérisée en ce que** le matériau des barres de puissance (4, 4') est poreux.

10. Borne de connexion selon la revendication 8 ou 9, **caractérisée en ce que** le revêtement électriquement isolant (12) est une barbotine à base d'eau, un matériau silicone ou un polymère, notamment un polyester ou un polyuréthane.

11. Borne de connexion selon l'une des revendications 8 à 10, **caractérisée en ce que** le revêtement électriquement isolant (12) est pourvu de charges.

12. Borne de connexion selon la revendication 11, **caractérisé en ce que** les charges sont constituées de particules de céramique, de sables de quartz ou de particules d'oxyde de titane.

13. Borne de connexion selon la revendication 11 ou 12, **caractérisé en ce que** les charges contiennent des fibres.

14. Borne de connexion selon la revendication 13, **caractérisé en ce que** les fibres sont constituées de polymères électriquement non conducteurs.

15. Borne de connexion selon l'une des revendications 1 à 14, **caractérisée en ce que** le raccordement pour le fluide de refroidissement est constitué d'un matériau électriquement isolant.
